Europäisches Patentamt

European Patent Office

Office européen des brevets

(11) Publication number: **0 427 555 A1**

# EUROPEAN PATENT APPLICATION

(21) Application number: 90312253.9

(51) Int. Cl.⁵: **B01D 19/00**

(22) Date of filing: 08.11.90

(30) Priority: 09.11.89 GB 8925339

(43) Date of publication of application:
15.05.91 Bulletin 91/20

(84) Designated Contracting States:
AT BE CH DE DK ES FR GB GR IT LI NL SE

(71) Applicant: UNILEVER PLC
Unilever House Blackfriars P.O. Box 68
London EC4P 4BQ(GB)
(84) GB

Applicant: UNILEVER NV
Burgemeester s'Jacobplein 1 P.O. Box 760
NL-3000 DK Rotterdam(NL)
(84) BE CH DE DK ES FR GR IT LI NL SE AT

(72) Inventor: **Barnes, Howard Anthony**
**55 Croft Avenue, Bromborough**
**Wirral, Merseyside L62 2BN(GB)**
Inventor: **Renshaw, Philip John**
**33 Orston Crescent, Spital**
**Bebington, Wirral, Merseyside L63 9NZ(GB)**
Inventor: **Hutchinson, John**
**15 Elliot Close, Stratford**
**London E15 4QG(GB)**

(74) Representative: **van der Toorren, Johannes,**
**Drs. et al**
**UNILEVER N.V. Patent Division Postbus 137**
**NL-3130 AC Vlaardingen(NL)**

(54) **Bubble removal.**

(57) Gas bubbles (G) are removed from a liquid (L) by application of an acoustic energy field which generates radiation pressure acting towards the periphery (12) of the liquid's container. This urges gas bubbles to the periphery, where they are separated. The container may be a flow conduit.

Fig. 1.

EP 0 427 555 A1

## BUBBLE REMOVAL

This invention relates to the removal of bubbles from liquids and, in particular, to the removal of gas bubbles by means of acoustic energy.

It is well known that the behaviour of bubbles in a liquid can be influenced by an acoustic field and there have been proposals for using ultrasonic energy to remove bubbles of gas. In one technique, the acoustic energy is used to break up the bubbles so that the gas is dispersed or dissolved in the liquid, as for example in US 4205966, but that leaves the gas more firmly held in the liquid and therefore has limited value, in particular if there is the slightest risk of the bubbles reforming in the subsequent handling of the liquid. Another approach is to use the acoustic energy to cause smaller bubbles to agglomerate so that they form larger bubbles that then move to the surface of the liquid by virtue of their increased buoyancy, as in the example of US 3853500.

As is recognised in US 4316734, which also employs this latter technique, the bubbles in an acoustic field are subject to radiation pressure which urges smaller bubbles towards nodal regions and larger bubbles towards antinodal regions. It can be shown that these different reactions are determined by whether the resonant frequency of a bubble is smaller or larger than the frequency of the acoustic field, and that the resonant frequency varies inversely to the bubble diameter. From theoretical considerations, therefore, it would seem that the radiation force would be of limited use for separating bubbles from a flow since the smaller bubbles would be driven to different positions in the field from the larger bubbles. However, because of other effects in the fluid medium, the small bubbles tend to clump together. The clumped bubbles may or may not collect into a single larger bubble, but it is observed in any case that a large group of small bubbles behaves similarly to a single bubble of the same size. In particular, buoyancy forces are produced which bring them more quickly to the surface of the liquid.

As an example of the technique of agglomerating smaller bubbles, in US 4339247 ultrasonic transducers are arranged around an elongate cylindrical flow chamber and operate in resonance with the chamber to vibrate it in such a manner that the acoustic energy is directed towards the centre of the chamber. The focussed acoustic energy causes rectified diffusion within the liquid flow which results in bubbles growing in the centre portion of the chamber from smaller bubbles dissolved in the liugid. As the larger bubbles form they rise to the surface of the liquid flow. The mechanism described by the patent specification in fact indicates that the chamber has longitudinal modes of vibration so that there are a series of axial nodes at which the bubbles tend to collect until they obtain sufficient buoyancy by their agglomeration to rise to the surface.

The ability to retain gas bubbles at the nodes of an ultrasonic standing wave is made use of in US4398925 by operating ultrasonic generating means so as to produce nodes in parallel horizontal planes in a liquid container. By a number of stepped changes of the vibration frequency, the levels of the nodes are changed in stages. The steps and their timing are so chosen that the bubbles are thereby progressively transferred to higher levels in the liquid, and their removal from the liquid is accelerated.

In the example of US 4316734 acoustic energy is used, not to establish a standing wave in the liquid but simply to induce vibration causing the bubbles to collide and coalesce, and to generate a radiation pressure sufficient to urge bubbles towards the surface of a static body of liquid. This process is described with reference to a highly attenuating liquid (molten glass) and similar pressure effects would require an excessive energy input in more commonly used liquids such as water and organic solvents. Heating of the liquid - unimportant in molten glass - could become a limiting factor.

Since the known methods for removing the gas bubbles from a liquid rely to a greater or lesser extent on the buoyancy of the bubbles, the rate of operation is inherently relatively slow and in many applications, if employed in an continuous manner on liquid flowing through a conduit, the flow velocity must he restricted if the apparatus is not to become excessively large. Nor would increasing the conduit cross-section provide a proportional improvement because the bubbles would have to rise from a greater maximum depth. Any attempt to accelerate the removal of bubbles in the manner proposed by US 4398925 would only have a limited effect, because the process would still be basically reliant on the buoyancy of the bubbles, and that process suffers from the disadvantage that it is performed on a static body of liquid.

According to one aspect of the present invention, there is provided apparatus for the removal of gas bubbles from a liquid, comprising a container for the liquid-gas mixture, means for generating an acoustic energy field in the container that has radiation pressure acting towards the periphery of the container, whereby to urge gas bubbles towards a peripheral region of the container, and separation means in said peripheral region for the removal of the displaced bubbles.

The invention is particularly well adapted to be applied to a continuous flow system, the liquid-gas mixture being directed through a conduit serving as said container and separation means being provided in said peripheral region downstream of at least part of said acoustic energy field for collecting and removing the gas in that portion of the flow.

Conveniently, the separation means comprises a longitudinally extending partition within the conduit and spaced from a peripheral wall of the conduit, to form a fluid passage therewith leading to gas outflow means, whereby the flow into said passage is separated from the flow in the conduit inwardly of the partition.

According to another aspect of the invention, there is provided a method of removing gas bubbles from a liquid in a container, in which an acoustic energy field acts on the interior of the container to generate a radiation pressure in the liquid towards the periphery of the container, gas bubbles driven by the radiation pressure to the region of the periphery being separated there from the body of liquid in the container.

By way of example, the invention will be described in more detail with reference to the accompanying schematic drawings, in which:

Fig. 1 is an axial section indicating one form of apparatus according to the invention, and

Figs. 2 and 3 illustrate modifications of the apparatus in Fig. 1.

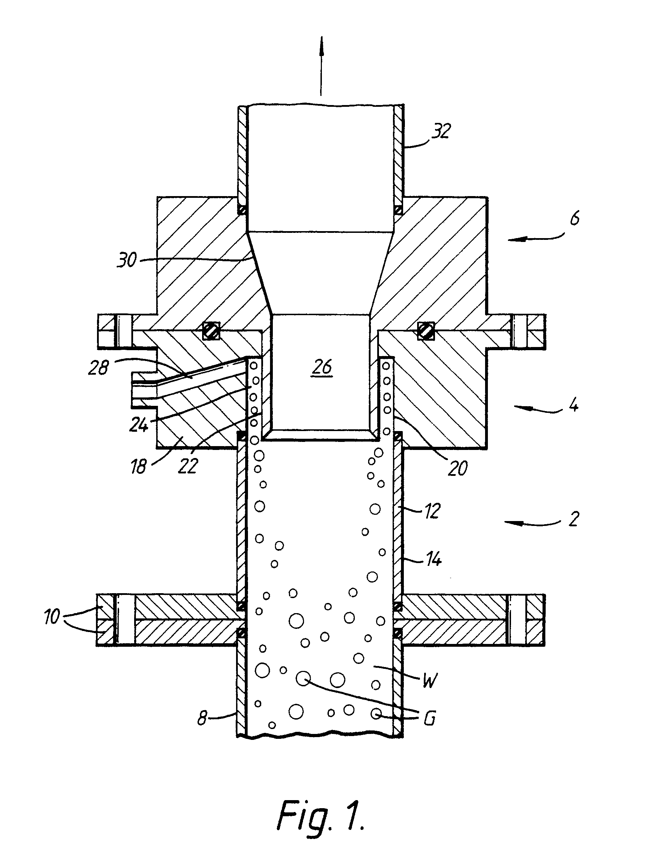

The apparatus is shown in Fig. 1 in the form of a conduit comprising a transducer section 2, a separator section 4 and a diffuser section 6, in series. A supply pipe 8 is coupled by flanges 10 to the transducer section of the apparatus to introduce an axial flow of liquid L which contains gas bubbles G that are to be removed from the flow.

The transducer section has a cylindrical wall 12 forming the periphery of the conduit and on which is mounted an ultrasonic transducer 14 that substantially surrounds the conduit. This circumferential transducer, which may be constructed as a complete cylinder or as a series of segments, is designed to generate an acoustic field at or close to the fundamental resonant frequency of sthe liquid column. For a cylindrical column of infinite length, this fundamental frequency ($f_r$) is given by

$$f_r = \frac{2.405}{2\pi b} c$$

where b is the radius of the column and c is the propagation velocity of the liquid in the column.

By energising the transducer at close to the fundamental resonant frequency a pressure node is formed along the circular periphery of the transducer section, essentially at the internal surface of the conduit, while a pressure antinode is produced in the central axial region of the section. Consequently, there is a cylindrical acoustic field in which the radiation pressure in the field acts outwards to the periphery.

In the separator section 4 immediately downstream of the transducer section 2, hollow body 18 has a bore 20 continuous with the conduit peripheral cross-section but a tubular divider 22 is located concentrically within it to form a separating wall between an outer tubular space 24 of the flow and a main, central passage 26. At the exit from the outer tubular space around the divider there is a take-off passage 28.

The flow through the central passage 26 continues into the diffuser section 6, where the conduit has a flared portion 30 to return to the cross-section of the transducer section, and then into an outlet pipe 32. The increase of the cross-section in the diffuser section facilitates the insertion of the apparatus into an existing pipe run.

In the entering flow from the pipe 8, bubbles in the liquid greater than the critical size will immediately be driven by the radiation pressure of the acoustic field in the transducer section 2 towards the conduit wall 12. Smaller bubbles initially driven to the central region will quickly agglomerate as they are urged together and will then also be driven outwards. The bubbles this become concentrated in a peripheral scavenging zone immediately adjacent to the conduit wall surface. At the exit from the transducer section the central portion of the flow, from which the bubbles have been removed, is able to continue straight through the separator and diffuser sections but the annular portion of the liquid flow in which the gas bubbles are concentrated enters the tubular space 24 between the bore 20 and the divider 22 and leaves the apparatus via the take-off passage 28.

The apparatus can thus provide a continuous flow of bubble-free liquid. It can of course provide similarly a static reservoir of bubble-free liquid. Bubbles driven to the periphery will remain there when bubble-free liquid is drawn from the central region and replaced with fresh liquid from which the bubbles are to be removed. If the buoyancy forces only allow the bubbles to rise and escape slowly, this is not important provided the peripheral region does not become saturated with bubbles.

The liquid flow diverted to the take-off passage 528 may only be a very small part of the total flow, since it will have a low velocity compared with the flow in the central region of the conduit, especially in the case of a fully developed pipe flow regime. The extracted liquid in which the bubbles are concentrated may be taken to a settling vessel where the increased-size bubbles can escape through their buoyancy and the liquid then returned to the main flow, either downstream or upstream of the apparatus.

In the drawing, the apparatus is shown oriented for a vertically upward fluid flow but that is not essential as the concentration of the gas bubbles in the outer peripheral region of the conduit is independent of gravity forces. In a horizontally flowing system the take-off passage outlet may be disposed at the top of the tubular space 24 to make use of the buoyancy of the bubbles, but in many operating conditions it is possible to rely solely on liquid flow through the tubular space to carry the bubbles out of the apparatus.

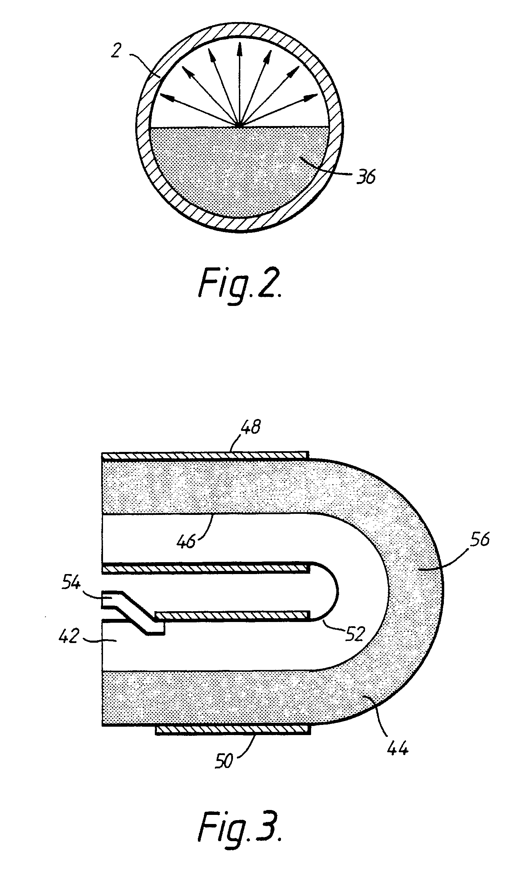

If reliance is put on the buoyancy of the bubbles, it may be appropriate to provide a generally horizontally disposed conduit and to confine the liquid flow to only the top half of the conduit. This is illustrated in Fig. 2 where a solid infill 36, or possibly a diametrical membrane backed by static liquid, blocks off the lower half of the conduit. The material occupying the lower half of the conduit is chosen to have the same acoustic impedance as the liquid flow, so that it does not alter sthe standing wave pattern. It will be seen that this gives one half of the standing wave system already described, with the anti-node now at a bottom boundary of the liquid passage. The acoustic energy will then not impose any downward forces on the separating bubbles.

With apparatus as shown in Fig. 1, employing a circular cross-section conduit has the advantage of focusing the ultrasonic field so that the acoustic intensity and pressure amplitude at the central region is increased. Steep pressure gradients can be produced without employing very high power inputs.

Other cross-sections can be employed, however. As an example, it may be preferred to give the conduit an elongate cross-section in which opposed transducers occupy substantially the whole length of a pair of longer parallel sides of the cross-section to establish the standing wave between them and drive bubbles to both of those sides of the cross-section. Such an arrangement allows higher ultrasonic frequencies to be used for a given flow cross-section, to accelerate the removal of smaller bubbles. In an analogous manner to the semi-circular flow channel shown in Fig. 2, gravitational effects can assist the separation process. For this the longer parallel sides of the elongate cross-section are horizontal and the lower half of the cross-section is filled in, for example using a solid material, or otherwise sealed off.

As a further alternative, an annular flow cross-section may be provided with transducers on the concentric inner and outer walls driving bubbles to both these walls. In this and the previous example employing a rectangular flow cross-section, ie. where the axis of the standing wave extends between parallel boundaries, it will be understood that it is possible to establish the standing wave with a transducer on one side of the channel and a reflector on the other.

The wavelength of the acoustic energy will be determined by a number of factors. For the required condition of resonance it must be matched to the transverse dimension (radius or width) of the flow channel, which is itself influenced by the designed mass flow rate. The initial bubble size is also relevant since the mechanism of displacement that has been described requires the bubble size to be small in relation to the wavelength - eg. for 1mm bubbles in water at NTP the acoustic energy frequency should not be much greater than about 150kHz. At the lower limit, it may be undesirable to work at frequencies below about 20kHz because the larger transducer displacement amplitudes then required may cause mechanical problems. The scope of the invention is not limited, however, to ultrasonic frequencies although the ultrasonic range is preferred.

The axial length of the transducer section will of course be related to the minimum path length required to draw all or a satisfactory proportion of the bubbles to the outer scavenging zone, which will also depend upon the sspeed of liquid flow. Transducer length does not pose a problem, however, because any length can be built up by grouping a number of acoustic energy sources in tandem. In this context, it has been found that the influence of the acoustic energy pattern appears to extend somewhat beyond the length of an energy source, so that grouped sources do not have to form a continuous series in order to provide a continuous acoustic field.

In many industrial processes, the complete removal of all bubbles is not necessary. In such cases, the length of the device can be reduced and the cross-sectional area can be increased even if this leads to a wider spacing between the opposed transducers and thus a lower resonant frequency. Although lowering the frequency reduces the influence on smaller diameter bubbles, concentrating on the removal of the larger diameter bubbles may more easily give the required level of clearance.

If the liquid velocity is sufficient, it is also possible to employ centrifugal forces to assist the separation process. Referring to the apparatus shown in Fig. 3, a U-form flow passage 42 has an impedance-matched solid body 44 of the same width bonded to the outer side face 46 of the passage. On the entry and exit lengths of the U-form passage there are respective pairs of transducers 48,50 operating, in the manner already described, to drive bubbles towards the inner side face 52 of the passage to deliver them to a take-off passage 54. As the flow passes round the bend 56 of the U-form, bubbles will tend to move to the inside of the bend because of the centrifugal forces acting, the bubbles having a lower density than the liquid. The concentration of the bubbles into the path to the exit length gas takeoff is thus assisted. This action can be extended by stacking a number of units of the form shown in Fig. 3, eg. so forming a spiral flow passage.

The solid infill 44 shown in Fig. 3 can be deployed in other ways depending upon the cross-sectional shape of the flow passage. For example, a rectangular cross-section flow passage can be left unchanged but have an impedance matched solid body bonded to one outer side face, the opposed transfusers then operating across the combined width of the channel and the solid body. Such an arrangement may avoid the need for diffusers and like transition flow arrangements preceding and following an internal infill.

In some conditions, the volume of bubbles in relation to the volume of liquid may be too great and the apparatus can only achieve partial separation. The existing liquid flow can then be led into a further corresponding apparatus to remove remaining bubbles, and of course the process can be repeated as many times as may be required, whether by recirculation of the liquid or by the use of further devices.

The invention is capable of many diverse applications. For example, the need to remove entrained air bubbles from a viscous liquid occurs commonly in a production procedure in which dry powdered material is trickled into a flow of a base liquid; the powder carries with it air which forms bubbles after the powder is dispersed in the liquid. If they are not removed, problems can then arise because the product has a variable density due to the presence of the bubbles. Their removal in a settling tank is slow and cannot be operated on a continuous flow. Known separators such as cyclones and vacuum separators are expensive and are not very reliable. Because of the different responses of solid particles and gas bubbles to ultrasonic energy of a particular wavelength the method of the present invention can be readily employed to avoid those problems.

As another example, lubricating oil may be required to act both as a lubricant and a coolant for the bearings of an engine and it is then required to limit the entrainment of air which would reduce the cooling capacity of the oil flow. In this latter situation air may be removed by use of a vacuum tower but that can lead to further problems, through the foaming of the oil, that would not be encountered in the use of the present invention.

The method of the invention, employed in a reiterative manner if necessary, is also well suited to processes that require complete removal of the bubbles in a liquid, such as the removal of gas from wash-water to be used in the course of the manufacture of semi-conductor chips.

## Claims

1. Apparatus for the removal of gas bubbles from a liquid, comprising a container for the liquid-gas mixture, means for generating an acoustic energy field in the container such that the field has radiation pressure acting towards the periphery of the container thereby to urge gas bubbles towards a peripheral region of the container, and separation means in said peripheral region for the removal of the displaced bubbles.

2. Apparatus according to claim 1 which is included in a continuous flow system, the liquid-gas mixture being directed through a conduit serving as said container, said separation means provided in said peripheral region being downstream of at least part of said acoustic energy field.

3. Apparatus according to claim 1 or claim 2 wherein the separation means comprises a longitudinally extending partition within the conduit and spaced from a peripheral wall of the conduit.

4. A method of remaing gas bubbles from a liquid in a container, comprising applying an acoustic energy field to act on the interior of the container to generate a radiation pressure in the liquid towards the periphery of the container, whereby the radiation pressure drives gas bubbles to the region of the periphery, and there separating the bubbles from the body of the liquid in the container.

5. A method according to claim 4 including causing sthe liquid-gas mixture to flow along a conduit which serves as said container.

Fig. 1.

Fig.2.

Fig.3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-A-3 803 981 (B. GRUBER et al.) * Column 1, lines 24-28,41-57; column 1, line 68 - column 2, line 3; column 2, lines 17-24; figure 4 * | 1,2,4 | B 01 D 19/00 |
| A | --- | 3,5 | |
| D,Y | US-A-4 316 734 (E.D. SPINOSA) * Claims * --- | 1,2,4 | |
| D,Y | US-A-4 339 247 (L. FAULKNER et al.) * Abstract * ----- | 1,2,4 | |
| | | | TECHNICAL FIELDS SEARCHED (Int. Cl.5) B 01 D |

The present search report has been drawn up for all claims

| Place of search | Date of completion of the search | Examiner |
|---|---|---|
| THE HAGUE | 15-02-1991 | VAN BELLEGHEM W.R. |